Europäisches Patentamt

European Patent Office

Office européen des brevets

(19)

(11) Veröffentlichungsnummer: **0 052 663 B1**

(12) # EUROPÄISCHE PATENTSCHRIFT

(45) Veröffentlichungstag der Patentschrift:
27.06.84

(21) Anmeldenummer: **80107073.1**

(22) Anmeldetag: **14.11.80**

(51) Int. Cl.³: **B 60 G 3/18**

---

(54) **Einzelrádaufhängung für nicht gelenkte, beim Federn eine Sturzänderung aufweisende Räder von Kraftfahrzeugen, insbesondere von Personenkraftwagen.**

(43) Veröffentlichungstag der Anmeldung:
**02.06.82 Patentblatt 82/22**

(45) Bekanntmachung des Hinweises auf die Patenterteilung:
**27.06.84 Patentblatt 84/26**

(84) Benannte Vertragsstaaten:
**DE FR GB IT SE**

(56) Entgegenhaltungen:
**DE - A - 2 038 880**
**FR - A - 1 425 504**

**AUTOMOBIL TECHNISCHE ZEITSCHRIFT Band 73, Nr. 7, 1971 Stuttgart W. MATSCHINSKY "Zur Analyse und Synthese räumlicher Einzelradaufhängungen" Seiten 247 bis 254**

(73) Patentinhaber: **BAYERISCHE MOTOREN WERKE Aktiengesellschaft, Postfach 40 02 40, D-8000 München 40 (DE)**

(72) Erfinder: **Kosak, Werner, Dipl.-Ing., Thomas-Schwarz-Strasse 43a, D-8060 Dachau (DE)**
Erfinder: **Matschinsky, Wolfgang, Dipl.-Ing., Korbinianplatz 9, D-8000 München 40 (DE)**

(74) Vertreter: **Dexheimer, Rolf, c/o Bayerische Motoren Werke Aktiengesellschaft Postfach 40 02 40, D-8000 München 40 (DE)**

## Beschreibung

Die Erfindung betrifft eine Einzelradaufhängung für nicht gelenkte, beim Federn eine Sturzänderung aufweisende Räder von Kraftfahrzeugen, insbesondere von Personenkraftwagen, der im Oberbegriff des Hauptanspruches angegebenen Bauart.

Eine derartige Einzelradaufhängung ist in der Fachzeitschrift »ATZ« 73 (1971) auf den Seiten 248 bis 250 unter den sphärischen Radaufhängungen beschrieben. Hierbei sind an Entwurfsdaten unter anderem der Radsturz »$\gamma$«, die angestrebte Sturzänderung »$\Delta\gamma$« des Rades beim Einfedern sowie der Querpolabstand »q« genannt, der mit der gewünschten Sturzänderung »$\Delta\gamma$« in der Beziehung steht: q = 1/$\Delta\gamma$.

Aus dieser Beziehung folgt für eine gewünscht kleine Sturzänderung »$\Delta\gamma$« über einen aus Komfortgründen relativ großen Federweg »f« (am Rad) ein verhältnismäßig großer Querpolabstand q = f/$\Delta\gamma$.

Der Zweck der Erfindung liegt darin, zwischen einem nach vorstehendem Zusammenhang resultierenden, relativ großen Querpolabstand und den Längen der im Oberbegriff des Hauptanspruches angeführten Ersatzlenker eine Beziehung herzustellen, nach der ein gewünschtes Eigenlenkverhalten des Rades der Einzelradaufhängung beim Federn erzielt ist.

Der Erfindung liegt die Aufgabe zugrunde, für eine Einzelradaufhängung nach dem Oberbegriff des Hauptanspruches eine in einem kleinen Einbauraum des Kraftfahrzeugs unterzubringende Anordnung von Längsarm und Querlenkern aufzuzeigen, durch die das Rad beim Ein- und Ausfedern im wesentlichen ein positives Vorspurverhalten aufweist.

Diese Aufgabe ist mit den im Kennzeichen des Hauptanspruches angegebenen Mitteln gelöst.

Mit der Erfindung ist der Vorteil erreicht, daß das Rad der Einzelradaufhängung mit einer zur Verringerung der Reifenbelastung gewünscht kleinen Sturzänderung beim Ein- und Ausfedern einen günstigen Vorspurverlauf aufweist, also nicht in Nachspur geht. Damit ist an einer Achse mit erfindungsgemäß aufgehängten Rädern ein untersteuerndes bis neutrales Lenkverhalten dieser Achse erzielt. Weiter ist an einer derartigen Achse mit niedrigem Momentanzentrum und (für kleine Sturzänderungen an den Rädern) relativ großen Querpolabständen mit der im letzten Kennzeichenmerkmal des Hauptanspruches angegebenen Anordnung des Gelenkes des Längsarmes ein maximaler Bremsnickausgleich und ein hoher Anfahrnickausgleich erreicht. Genügt ein geringerer Anfahrnickausgleich, bleiben die übrigen vorerwähnten Vorteile der Erfindung auch bei ungleichlangen Ersatzlenkern mit kürzerem oberen Ersatzlenker voll erhalten, wenn entweder das Gelenk des Längsarmes abgesenkt und/oder dafür der Querpol angehoben wird.

Die nach dem Hauptanspruch erfindungsgemäßen Längen der in der Querebene liegenden Ersatzlenker sind auf einfache Weise nach Anspruch 6 durch in Fahrtrichtung vor der Querebene angeordnete Querlenker erzielt, wobei sich die Anordnung des Gelenkes des Längsarmes im Bereich der Radmittenebene gemäß einem Teilmerkmal des Hauptanspruches und ferner nahe der Radkontur nach Anspruch 8 vorteilhaft auswirkt. Damit sind kurz bauende Querlenker erzielt, die vorteilhaft bei kleinem Einbauraum sind. Weiter ist damit eine Einzelradaufhängung erzielt, die einen kleinen Einbauraum benötigt, so daß bei einer Hinterachse mit erfindungsgemäß aufgehängten Rädern in vorteilhafter Weise ein großer Kofferraum erzielt und/oder vor der Hinterachse unterhalb der Rücksitzbank ein großer Brennstofftank untergebracht werden kann. Längsarm und Querlenker jeder erfindungsgemäßen Einzelradaufhängung einer Achse können direkt am Fahrzeugaufbau gelagert werden, wodurch ein eigener Achsträger entfällt. Damit entfällt auch eine Verbindung zwischen beiden Einzelradaufhängungen der Achse, wodurch kein Mitlenken bei einseitig wirkenden Kräften auftritt. Mit dem Fortfall eines Achsträgers wird zusätzlicher Raum für den Kofferraum und/oder den Brennstoffbehälter gewonnen, wodurch auch der Fahrzeugschwerpunkt abgesenkt werden kann. In einer angetriebenen Achse ohne Achsträger ist mit einem am Fahrzeugaufbau befestigten Achsgetriebe eine Belastung der Radaufhängung durch Antriebsmomente des Achsgetriebes vermieden.

Bei einer Ausgestaltung der Erfindung nach Merkmalen des Anspruches 2, wobei das in einem Teilmerkmal genannte Gelenk des Längsarmes auf einer Parallelen zur Radachse durch den Querpol angeordnet ist — Radaufhängung in Fahrtrichtung von hinten gesehen — ergibt sich, daß die durch das vorgenannte Gelenk und den Querpol verlaufende Momentanachse der Radaufhängung in jeder ein- und ausgefederten Radstellung — in Fahrtrichtung von hinten gesehen — zur Radachse parallel verläuft, d. h. die Momentanachse folgt der Schwenkung der Radachse in parallelem Abstand. Mit djeser Anordnung ist der Grenzfall einer Geraden als Vorspurkurve erzielt, da keine Vorspuränderung eintritt. Dies bedeutet, daß die vorgegebene Vorspur des Rades beim Ein- und Ausfedern unverändert bleibt. Liegt das Gelenk dagegen unter oder über der erwähnten Parallelen, so erhält die gerade Vorspurkurve eine Neigung (Unter- bzw. Übersteuern).

Stärker gekrümmte, positive Vorspurkurven werden mit nach Anspruch 3 gewählten Ersatzlenkerlängen erzielt. Entsprechend der Wahl der Länge des oberen Ersatzlenkers relativ zum unteren Ersatzlenker kann eine Vorspurkurve erzielt sein, nach der beim Einfedern des Rades eine starke positive Vorspuränderung und beim Ausfedern eine zur Nachspur tendierende Vorspuränderung gegeben ist.

Mit einer Anordnung der Querlenker nach Anspruch 4 ist eine progressive Sturzänderung erzielt. Diese kann um so eher verwirklicht werden, je höher der Momentanpol gewählt wird und/ oder je tiefer das Längsarmlager liegt.

Die erfindungsgemäßen Längen der Ersatzlenker stehen mit der relativ zur Radachse vertikalen Anordnung des Gelenkes des Längsarmes in einer solchen Beziehung, daß mit den Merkmalen des Anspruches 5 für ein Rad mit negativem Sturz die Vorspurkurve gekippt werden kann. Mit der Maßnahme nach Anspruch 5 wird die Vorspurkurve beim Einfedern in Richtung positiver Vorspur und beim Ausfedern in Richtung negativer Vorspur, also Nachspur gedreht. Damit ist an einer Achse mit erfindungsgemäß aufgehängten Rädern eine untersteuernde Vorspurcharakteristik erzielt.

Mit der Anordnung der Querlenker nach den Ansprüchen 6 und 7 ergeben sich zwei bauliche Vorteile, nämlich, daß die fahrzeugseitige Anlenkung des oberen Querlenkers relativ tief angeordnet werden kann, was den Vorteil eines tiefen Kofferraumbodens ergibt, und zum anderen, daß die fahrzeugseitige Anlenkung des unteren Querlenkers relativ hoch anzuordnen ist mit dem Vorteil einer hochverlegten Auspuffleitung.

Mit der Anordnung nach Anspruch 7 ergibt sich zudem der Vorteil einer raumsparenden, einfachen und gewichtsgünstigen Krafteinleitung in den Fahrzeugaufbau.

Mit der weiteren Anordnung des Längsarm-Gelenkes nach Anspruch 8 können in vorteilhafter Weise große Ersatzlenkerlängen sowie Brems- und Anfahrnickabstützwinkel erzielt werden.

Die Erfindung ist anhand eines in der Zeichnung dargestellten Ausführungsbeispiels beschrieben. Die Zeichnung zeigt eine schematisch dargestellte Einzelradaufhängung nach der Erfindung in

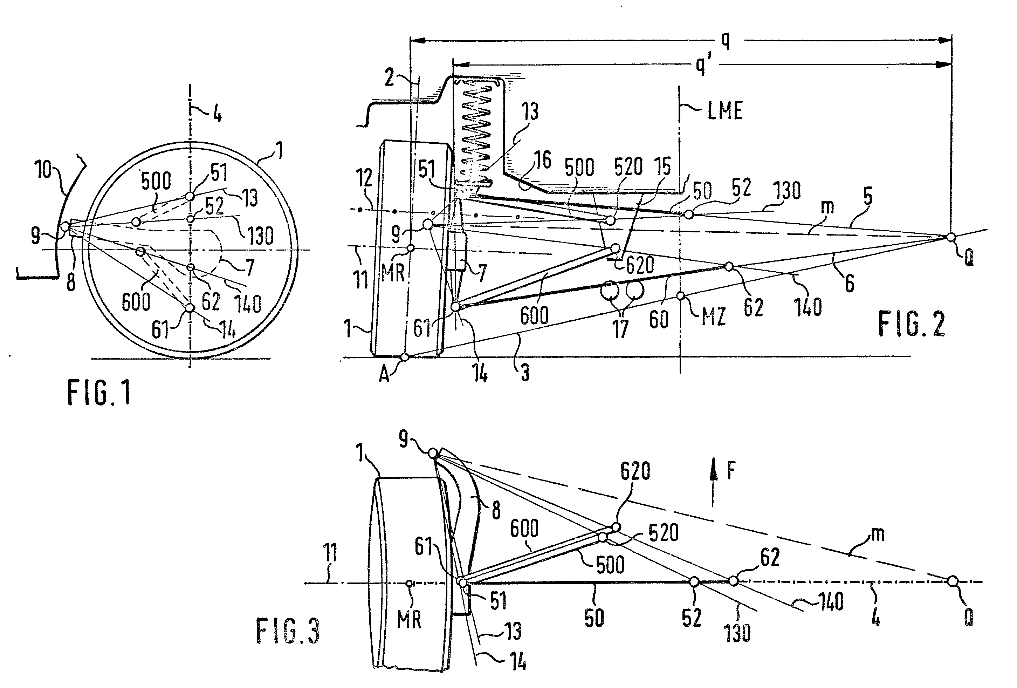

Fig. 1 im Längsriß,
Fig. 2 im Querriß und in
Fig. 3 im Grundriß.

Im Querriß ist ein Rad 1 mit negativem Sturz (unmaßstäblich) gezeigt. Vom Aufstandspunkt A der Radmittenebene 2 des Rades 1 ist durch das in Fahrzeuglängsmittenebene LME in vorbestimmter Höhe eingezeichnete Momentanzentrum MZ eine Gerade 3 angeordnet, auf deren Verlängerung über MZ hinaus der Querpol Q liegt. Der Abstand q des Querpols Q von der Radmittenebene 2 in Mitte Rad MR ist aus dem für eine Komfortfederung relativ großen, am Rad 1 gemessenen Federweg f und einer gewünscht kleinen Sturzänderung während der Federung nach der Beziehung $q = \dfrac{f}{\Delta \gamma}$ ermittelt.

Der Querpol Q liegt in einer durch Mitte Rad MR vertikal verlaufenden Querebene, die im Grund- und Längsriß durch eine Gerade 4 veranschaulicht ist. Im Querriß sind von Q aus etwa auf den Rand einer nicht gezeigten Radfelge des Rades 1 Strahlen 5 und 6 gerichtet. Auf dem oberen Strahl 5 ist ein Ersatzlenker 50 und auf dem unteren Strahl 6 ein Ersatzlenker 60 abgebildet. Die Ersatzlenker 50 und 60 sind mit ihren radseitigen Anlenkungen 51 und 61 nahe dem Rad 1 bzw. der Radmittenebene 2 in einem vom Querpol Q aus festgesetztem Hilfsabstand q' angeordnet. Der Hilfsabstand q' ist zwischen den Anlenkungen 51 und 61 gemittelt. Der Ersatzlenker 50 hat eine Länge von q'/2, wogegen der Ersatzlenker 60 etwas länger als q'/2 ist.

Das Rad 1 steht mit einem Radträger 7 in Verbindung, der mit einem in Fahrzeuglängsrichtung angeordneten Längsarm 8 fest verbunden ist. Der Längsarm 8 steht über ein Gelenk 9 mit dem Fahrzeugaufbau 10 in gelenkiger Verbindung, wobei das Gelenk 9 — in Fahrtrichtung F gesehen — vor der Radachse 11 angeordnet ist. Zur Erzielung großer Brems- und Abfahrnickabstützwinkel ist das Gelenk 9 ferner in einer Höhe oberhalb der Radachse 11 gewählt, höchstens jedoch auf einer durch den Querpol Q verlaufenden Parallelen 12 zur Radachse 11 (im Querriß betrachtet). Weiter ist das Gelenk 9 nahe der Radmittenebene 2 gewählt.

Vom Gelenk 9 sind Strahlen 13 und 130 zu den in der Querebene 4 liegenden Anlenkungen 51 und 52 des oberen Ersatzlenkers 50 und Strahlen 14 und 140 zu den in der Querebene 4 liegenden Anlenkungen 61 und 62 des unteren Ersatzlenkers 60 angeordnet. Einen kleinen Einbauraum benötigende, relativ kurze und damit leichtbauende Querlenker 500 und 600 zur gelenkigen Verbindung des Radträgers 7 mit einem Lagerbock 15 am Fahrzeugboden 16 sind erreicht durch in Fahrtrichtung (Pfeil F) vor der Querebene 4 auf den Strahlen 130 und 140 angeordnete Anlenkungen 520 und 620. Die Anlenkungen 51 und 61 der Ersatzlenker 50 und 60 sind im dargestellten Beispiel mit den radseitigen Anlenkungen der Querlenker 500 und 600 identisch und am Radträger 7 fest angeordnet. Die dem Fahrzeugboden 16 zugewandten Anlenkungen 520 und 620 sind in einem relativ kleinen, vertikalen Abstand angeordnet, wobei die Anlenkung 620 des unteren Querlenkers 600 etwa auf Höhe der Radachse 11 liegt. Ein verhältnismäßig tief gelagerter Fahrzeugboden 16 einerseits und eine hoch verlegte Auspuffleitung 17 andererseits sind damit erzielt.

Ist die durch Gelenk 9 und Querpol Q verlaufende Momentanachse m der Einzelradaufhängung zur Fahrzeuglängsmittenebene LME weniger geneigt als die Radachse 11, ist für das Rad 1 bei gewünscht kleiner Sturzänderung über den durch die Paralleleinfederung vorbestimmten Federweg ein günstiges Vorspurverhalten gegeben.

Das Gelenk 9 kann auch als ein elastisches Lager mit verschiedenen Federhärten in zueinander unterschiedlichen Richtungen ausgebildet sein, um bei gewünschter Längsfederung des Rades 1 ein gewünschtes Vorspurverhalten des Rades 1 bei Längs- oder Seitenkraft zu erzielen. Vorteilhaft ist ein solches Lager insbesondere bei außerhalb der Radmittenebene 2 vorgesehenen Gelenk 9, womit eine elastokinematisch günstige Anlenkung der Einzelradaufhängung erzielt ist.

Im Rahmen der Erfindung bleibt es, wenn einer oder beide Querlenker hinter der Querebene 4 angeordnet werden, wobei jedoch eine Fahrzeugachse mit sich möglicherweise kreuzenden Querlenkern erzielt ist und zudem größere ungefederte Massen gegeben sind.

Die Erfindung gilt auch für ein Rad mit positivem Sturz, wobei ein günstiges untersteuerndes Vorspurverhalten gegeben ist, wenn die Momentanachse bei unterhalb der Radachse angeordnetem Längsarm-Gelenk sich fahrzeugseitig mit der Radachse schneidet und bei oberhalb der Radachse angeordnetem Längsarm-Gelenk sich außerhalb des Fahrzeuges schneidet.

**Patentansprüche**

1. Einzelradaufhängung für nicht gelenkte, beim Federn eine Sturzänderung aufweisende Räder von Kraftfahrzeugen, insbesondere von Personenkraftwagen, mit einem Radträger (7),

— der über einen in Fahrzeuglängsrichtung angeordneten Längsarm (8) und
— in Fahrzeugquerrichtung mittels zweier übereinander angeordneter Querlenker (500, 600) mit dem Fahrzeugaufbau (10) gelenkig verbunden ist, wobei
— die Querlenker (500, 600) in einer durch die Radmitte (MR) vertikal verlaufenden Querebene Ersatzlenker (50, 60) bilden, deren
— zur Fahrzeugmitte gerichtete Verlängerungen sich in einem im Abstand (q) von der Radmittenebene liegenden Querpol schneiden,

dadurch gekennzeichnet,

— daß die Ersatzlenker (50, 60) mit ihren radseitigen Anlenkungen (51, 61) in einem vom Querpol (Q) aus festgelegtem Hilfsabstand (q') im Bereich der Radmittenebene (2) vorgesehen sind, und
— daß der Ersatzlenker (60) des unteren Querlenkers (600) etwa so lang bzw. etwas länger als der halbe Hilfsabstand ($\gtrsim q'/2$) ist, und
— der obere Querlenker (500) einen Ersatzlenker (50) bildet, dessen Länge kleiner oder gleich dem unteren Ersatzlenker (60) ist,
— daß der Längsarm (8) in Fahrtrichtung (F) nach vorne weisend angeordnet ist mit einem Gelenk (9), das
— bei etwa gleich langen Ersatzlenkern oberhalb der Radachse (11) sowie im Bereich der Radmittenebene (2) gewählt ist.

2. Einzelradaufhängung nach Anspruch 1, dadurch gekennzeichnet,

— daß die Querlenker (500, 600) gleichlange, in etwa zur Radachse (11) symmetrisch angeordnete Ersatzlenker (50, 60) von jeweils dem halben Hilfsabstand (q'/2) entsprechender Länge bilden, wobei
— das Gelenk (9) — in der Ansicht von hinten

— maximal in Höhe der Parallelen (12) zur Radachse (11) durch den Querpol (Q) angeordnet ist.

3. Einzelradaufhängung nach Anspruch 1, dadurch gekennzeichnet, daß die Querlenker (500, 600) Ersatzlenker (50, 60) von jeweils einer dem halben Hilfsabstand größeren Länge ($> q'/2$) bilden.

4. Einzelradaufhängung nach Anspruch 1, dadurch gekennzeichnet, daß der obere Querlenker (500) einen Ersatzlenker (50) bildet, der kürzer ist als der mit etwa q'/2 ausgebildete Ersatzlenker (60) des unteren Querlenkers (600).

5. Einzelradaufhängung nach den Ansprüchen 1 bis 4, mit einem Rad in negativem Sturz, dadurch gekennzeichnet, daß das Gelenk (9) — bei Konstruktionslage in Fahrtrichtung von hinten gesehen — in einer solchen Höhe über der Radachse (11) angeordnet ist, daß die durch Gelenk und Querpol (Q) verlaufende Momentanachse (m) in der Konstruktionslage zur Fahrzeugmitte hin weniger stark abfällt als die Radachse.

6. Einzelradaufhängung nach den Ansprüchen 1 bis 5, dadurch gekennzeichnet, daß beide Querlenker (500, 600) mit ihren dem Fahrzeugaufbau [Fahrzeugboden (16)] zugewandten Anlenkungen (520, 620) — in Fahrtrichtung — vor der Querebene (4) bzw. der Radachse (11) angeordnet sind.

7. Einzelradaufhängung nach Anspruch 6, dadurch gekennzeichnet, daß die Querlenker (500, 600) mit ihren Anlenkungen (520, 620) am Fahrzeugaufbau in einem relativ kleinen, vertikalen Abstand angeordnet sind und die Anlenkung (620) des unteren Querlenkers (600) etwa in Höhe der Radachse (11) liegt.

8. Einzelradaufhängung nach den Ansprüchen 1 bis 7, dadurch gekennzeichnet, daß das Gelenk (9) nahe der Radkontur am Fahrzeugaufbau (10) angeordnet ist.

9. Einzelradaufhängung nach einem oder mehreren der Ansprüche, dadurch gekennzeichnet, daß der Hilfsabstand (q') etwa dem Querpolabstand (q) entspricht.

**Claims**

1. An independent suspension for non-steered wheels of motor vehicles exhibiting a camber variation during suspension movement, especially for passenger vehicles, the suspension comprising a wheel carrier (7),

— which is hinged to the vehicle structure (10) through a longitudinal arm (8), arranged in the longitudinal direction of the vehicle, and
— in the transverse direction of the vehicle, by means of two superposed transverse guide rods (500, 600),
— the transverse guide rods (500, 600) forming substitute guide rods (50, 60) in a transverse plane extending vertically through the wheel centre (MR),

— the extensions of which guide rods, directed towards the centre of the vehicle, intersect in a transverse pole lying at a distance (q) from the plane of the wheel centre,

characterized in

— that the substitute guide rods (50, 60) are arranged with their wheel-side linkages (51, 61) at a fixed additional distance (q') from the transverse pole (Ω) in the zone of the plane (2) of the wheel centre, and
— the substitute guide rod (60) of the lower transverse guide rod (600) is approximately as long as or slightly longer than half the addition distance ($\gtrsim$ q'/2) and
— the other transverse guide rod (500) forms a substitute guide rod (50), the length of which is less than or equal to that of the lower substitute guide rod (60), and
— that the longitudinal arm (8) is directed forwardly in the direction of travel (F) and has a hinge (9), which,
— when the substitute guide rods are of roughly the same length, is disposed above the wheel axle (11) and in the zone of the plane (2) of the wheel centre.

2. An independent suspension according to claim 1, characterized in

— that the transverse guide rods (500, 600) form equally long substitute guide rods (50, 60) which are arranged roughly symmetrically in relation to the wheel axle (11) and which each have a length corresponding to half the additional distance (q'/2),
— the hinge (9) — as seen from the rear — being arranged maximally at the same level as the line (12) that is parallel to the wheel axle (11) and passes through the transverse pole (Ω).

3. An independent suspension according to claim 1, characterized in that the transverse guide rods (500, 600) form substitute rods (50, 60) each having a length (> q'/2) greater than half of the additional distance.

4. An independent suspension according to claim 1, characterized in that the upper transverse guide rod (500) forms a substitute guide rod (50), which is shorter than the substitute guide rod (60) of the lower transverse guide rod (600) that has a length roughly equivalent to q'/2.

5. An independent suspension according to claims 1 to 4, with a wheel in negative camber, charcterized in that the hinge (9) — as seen from the rear in the direction of travel and when in its assembled position — is arranged at such a level above the wheel axle (11) that the axis (m) of instantaneous rotation, extending through the hinge and the transverse pole (Ω), drops towards the middle of the vehicle to a lesser extent than the wheel axle, in the assembled position.

6. An independent suspension according to claims 1 to 5, characterized in that the two transverse guide rods (500, 600) are arranged with their linkages (520, 620) facing the vehicle structure [vehicle floor (16)] and forwardly of the transverse plane (4) and the wheel axle (11) as viewed in the direction of travel.

7. An independent suspension according to claim 6, characterized in that the transverse guide rods (500, 600) are arranged with their linkages (520, 620) on the vehicle structure and at a relatively small vertical distance apart, and the linkage (620) of the lower transverse guide rod (600) is disposed roughly at the same level as the wheel axle (11).

8. An independent suspension according to claim 1 to 7, characterized in that the hinge (9) is arranged on the vehicle structure (10) near the wheel contour.

9. An independent suspension according to any one or more of the preceding claims, characterized in that the additional distance (q') corresponds roughly to the transverse pole distance (q).

**Revendications**

1. Suspension indépendante pour roue non directrice de véhicules à moteur, en particulier d'automobile de tourisme, présentant une variation de carrossage pendant le mouvement de suspension comportant un support de roue (7)

— qui est relié à articulation par l'intermédiaire d'un bras allongé (8) et de deux bielles transversales superposées (500, 600) avec la carrosserie (10) du véhicule,
— les bielles transversales (500, 600) formant des bielles de remplacement (50, 60) dans un plan transversal s'étendant verticalement par le centre de roue (MR), dont les prolongements, dirigés vers le milieu du véhicule, se recoupent en un pôle transversal (Ω) situé à une distance (q) du plan du centre de la roue,

suspension caractérisée en ce que:

— les bielles de remplacement (50, 60) sont prévues, avec leurs articulations côté roue (51, 61) d'une distance auxiliaire prédéterminée (q') du pôle transversal (Ω), dans le domaine du plan de centre de roue (2),
— la bielle de remplacement (60) de la bielle transversale inférieure (600) étant d'une longueur égale ou un peu supérieure à la moitié de la distance auxiliaire (environ q'/2),
— la bielle transversale supérieure (500) formant une bielle de remplacement (50) dont la longueur est inférieure ou égale à celle de la bielle de remplacement inférieure (60),
— le bras allongé (8) étant disposé orienté vers l'avant en direction de la marche (F) avec une articulation (9) qui est choisie pour des bielles de remplacement sensiblement de même longueur, au-dessus de l'essieu de roue (11) et dans le plan du centre de roue (2).

2. Suspension de roue indépendante suivant la revendication 1, caractérisée en ce que:

— les bielles transversales (500, 600) de même longueur, forment des bielles de remplacement (50, 60), disposées symétriquement par rapport à l'essieu du roue (11) qui sont chacune d'une longueur égale à la moitié de la distance auxiliaire (q'/2),
— l'articulation (9) étant disposée (vue par l'arrière) au maximum à la hauteur d'une parallèle (12) à l'essieu de roue (11) passant par le pôle transversal (Q).

3. Suspension de roue indépendante suivant la revendication 1, caractérisé en ce que les bielles transversales (500, 600) forment des bielles de remplacement (50, 60) ayant chacune une longueur égale à la moitié de celle de la distance auxiliaire (q'/2).

4. Suspension de roue indépendante suivant la revendication 1, caractérisée en ce que la bielle transversale supérieure (500) forme une bielle de remplacement (50) qui est plus courte que la bielle de remplacement (60) constituée avec une longueur q'/2 de la bielle transversale inférieure (600).

5. Suspension indépendante siuvant l'une quelconque des revendications 1 à 4, avec une roue à carrossage négatif, caractérisée en ce que l'articulation (9) — vue en position de construction par l'arrière en direction de la marche — est disposée au-dessus de l'essieu de roue (11), à une hauteur telle, que l'axe instantané (m) passant par l'articulation et par le pôle transversal (Q) est en inclinaison descendante en direction du milieu du véhicule inférieure à celle de l'essieu de roue.

6. Suspension de roue indépendante suivant l'une quelconque des revendications 1 à 5, caractérisé en ce que les deux bielles transversales (500, 600) sont disposées, avec leurs articulations (520, 620) tournées vers le véhicule (fond de la carrosserie 16), vues en direction de la marche (F) en avant du plan transversal (4) et de l'essieu de roue (11).

7. Suspension à roue indépendante suivant la revendication 6, caractérisée en ce que les bielles transversales (500, 600) sont disposées, sur la carrosserie, à une distance verticale relativement faible et l'articulation (620) de la bielle transversale inférieure (600) est sensiblement à hauteur de l'essieu de roue (11).

8. Suspension indépendante suivant l'une quelconque des revendications 1 à 7, caractérisé en ce que l'articulation (9) est disposée, dans la carrosserie (10) à proximité du contour de la roue.

9. Suspension indépendante suivant l'une quelconque des revendications 1 à 8, caractérisé en ce que la distance auxiliaire (q') correspond sensiblement à la distance (q).

FIG.1

FIG.2

FIG.3

0 052 663